(19) **Europäisches Patentamt / European Patent Office / Office européen des brevets**

(11) **EP 3 509 182 A1**

(12) # EUROPEAN PATENT APPLICATION
published in accordance with Art. 153(4) EPC

(43) Date of publication:
**10.07.2019 Bulletin 2019/28**

(21) Application number: **17846587.8**

(22) Date of filing: **30.08.2017**

(51) Int Cl.:
*H02J 7/35* (2006.01)    *H01G 9/20* (2006.01)
*H01M 10/42* (2006.01)    *H01M 10/44* (2006.01)
*H01M 10/48* (2006.01)

(86) International application number:
**PCT/JP2017/031216**

(87) International publication number:
**WO 2018/043583 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.08.2016 JP 2016170261**

(71) Applicant: **Fujikura Ltd.**
**Tokyo 135-8512 (JP)**

(72) Inventors:
• **NAKA Mami**
  **Sakura-shi**
  **Chiba 285-8550 (JP)**
• **YAMAMOTO Kazuhiro**
  **Sakura-shi**
  **Chiba 285-8550 (JP)**
• **SEKI Yasuyuki**
  **Sakura-shi**
  **Chiba 285-8550 (JP)**

(74) Representative: **Hoffmann Eitle**
**Patent- und Rechtsanwälte PartmbB**
**Arabellastraße 30**
**81925 München (DE)**

(54) **PHOTOELECTRIC CONVERSION DEVICE**

(57)    Disclosed is a photoelectric conversion device including a photoelectric conversion element; a voltage conversion part boosting a voltage output from the photoelectric conversion element; an electric storage part capable of being charged up to a voltage output from the voltage conversion part; a load part for applying a voltage of the electric storage part; a voltage monitoring part monitoring a voltage of the electric storage part; a switching part switching a first state where a voltage output from the voltage conversion part is applied only to the electric storage part and a second state where a voltage output from the voltage conversion part is not applied to any of the electric storage part and the load part; and a controlling part. The controlling part controls the switching part so that the electric storage part is discharged and a voltage is applied to the load part by switching the switching part to the second state in a case where a voltage of the electric storage part monitored by the voltage monitoring part reaches a full charge voltage of the electric storage part, or controls the switching part so that the electric storage part is charged by switching the switching part to the first state in a case where a voltage of the electric storage part monitored by the voltage monitoring part becomes less than the full charge voltage of the electric storage part. The photoelectric conversion element includes at least one photoelectric conversion cell, the photoelectric conversion cell includes an electrode substrate; a counter substrate facing the electrode substrate; an oxide semiconductor layer provided on the electrode substrate or the counter substrate; a dye supported on the oxide semiconductor layer; and an electrolyte disposed between the electrode substrate and the counter substrate and containing a redox pair.

EP 3 509 182 A1

# Fig.1

## Description

TECHNICAL FIELD

The present invention relates to a photoelectric conversion device having a photoelectric conversion element and an electric storage part.

BACKGROUND ART

As a photoelectric conversion element, a photoelectric conversion element using dyes attracts attention since it is inexpensive and can obtain high photoelectric conversion efficiency, and various developments on photoelectric conversion elements using dyes are performed.

The photoelectric conversion element using dyes generally includes a photoelectric conversion cell which has an electrode substrate, a counter substrate facing the electrode substrate, an oxide semiconductor layer provided on the electrode substrate or the counter substrate, a dye supported on the oxide semiconductor layer, a ring-shaped sealing portion bonding the electrode substrate and the counter substrate, and an electrolyte which is arranged in a cell space surrounded by the electrode substrate, the counter substrate and the sealing portion and contains a redox pair such as iodine/iodide ion. The photoelectric conversion element is generally used with it connected to an electric storage part such as an external load circuit or a secondary battery. That is, power generated in the photoelectric conversion element is consumed in the external load circuit or accumulated in the electric storage part.

However, in a case where the external load circuit is not operating with power generated in the photoelectric conversion element, or in a case where the electric storage part is in a fully charged state, power consumption and accumulation are not performed for a long time. That is, the photoelectric conversion element is in an open circuit state over a long period of time. In this case, a state in which the high voltage is generated with light irradiated continues for a long time, and electrons generated by photoexcitation of the dye are charged to the conduction band of the oxide semiconductor layer. However, since an open circuit state continues over a long period of time, electrons move from the oxide semiconductor layer to the electrolyte. As a result, the reduction reaction of iodine proceeds, and the ratio of iodine and iodide ions in the electrolyte is changed to lower power generation performance.

Accordingly, to prevent a photoelectric conversion element from being in the open circuit state over a long period of time, it is suggested to provide a deterioration suppression control device for the photoelectric conversion element in a circuit where a photoelectric conversion element, and an electric storage part capable of charging a voltage output from the photoelectric conversion element are connected (see Patent document 1 below). The deterioration suppression control device includes: a current detection part detecting a current from the photoelectric conversion element; a voltage detection part detecting a voltage output from the photoelectric conversion element, and connects a positive electrode and a negative electrode of the photoelectric conversion element by a short-circuit part based on the current detected by the current detection part and the voltage detected by the voltage detection part.

CITATION LIST

PATENT DOCUMENT

Patent document 1: JP5,618134B

SUMMARY OF THE INVENTION

PROBLEM TO BE SOLVED BY THE INVENTION

However, the deterioration suppression control device described in the patent document 1 has the following problems.

That is, the deterioration suppression control device described in the patent document 1 connects the positive electrode and the negative electrode of the photoelectric conversion element by the short-circuit part, for example, when the current detected by the current detection part becomes sufficiently small. For this reason, an excessive current flows in the photoelectric conversion element, and the photoelectric conversion element may be broken.

Therefore, required is a photoelectric conversion device preventing destruction of a photoelectric conversion element in a circuit where the photoelectric conversion element and an electric storage part capable of charging the voltage output from the photoelectric conversion element, and having excellent durability.

The present invention has been made in view of the above circumstances, and an object of the present invention is to provide a photoelectric conversion element preventing destruction of a photoelectric conversion element and having excellent durability.

MEANS FOR SOLVING PROBLEM

In order to solve the above problems, the present invention is a photoelectric conversion device including a photoelectric conversion element, a voltage conversion part boosting a voltage output from the photoelectric conversion element, and an electric storage part capable of being charged to a voltage output from the voltage conversion part; and a load part which is arranged in parallel to the electric storage part and is used to apply a voltage of the electric storage part, a voltage monitoring part monitoring the voltage of the electric storage part, a switching part switching a first state in which a voltage output from the voltage conversion part is applied only to the electric storage part, and a second state in which the voltage output from the voltage conversion part is not applied to any of the electric storage part and the load part, and a controlling part controlling the switching part so that the electric storage part is discharged and a voltage is applied to the load part by switching the switching part to the second state in a case where the voltage of the electric storage part monitored by the voltage monitoring part reaches a full charge voltage of the electric storage part, and controlling the switching part so that the electric storage part is charged by switching the switching part to the first state in a case where the voltage of the electric storage part monitored by the voltage monitoring part becomes less than the full charge voltage of the electric storage part, wherein the photoelectric conversion element includes at least one photoelectric conversion cell, and wherein the photoelectric conversion cell includes an electrode substrate, a counter substrate facing the electrode substrate, an oxide semiconductor layer provided on the electrode substrate or the counter substrate, a dye supported on the oxide semiconductor layer, and an electrolyte which is disposed between the electrode substrate and the counter substrate, and which contains a redox pair.

According to the photoelectric conversion device, when light is irradiated to the photoelectric conversion element, power generation is performed in the photoelectric conversion element. Then, the voltage output from the photoelectric conversion element is boosted at the voltage conversion part. At this time, in a case where the voltage of the electric storage part monitored by the voltage monitoring part is less than the full charge voltage of the electric storage part, the switching part is controlled by the controlling part so that the electric storage part is charged by switching the switching part to the first state where the voltage output from the voltage conversion part is applied only to the electric storage part. In a case where the voltage of the electric storage part monitored by the voltage monitoring part reaches the full charge voltage of the electric storage part, the switching part is immediately controlled by the controlling part so that the electric storage part is discharged and a voltage is applied to the load part by switching the switching part to the second state where the voltage output from the voltage conversion part is not applied to any of the electric storage part and the load part. Then, in a case where the voltage of the electric storage part monitored by the voltage monitoring part becomes less than the full charge voltage of the electric storage part, the switching part is immediately controlled by the controlling part so that the electric storage part is charged by switching the switching part to the first state where the voltage output from the voltage conversion part is applied only to the electric storage part. Thus, it is sufficiently suppressed that the photoelectric conversion element is in an open circuit state over a long period of time. Therefore, it is fully suppressed that after electrons generated by photoexcitation of the dye are charged to the conduction band of the oxide semiconductor layer, electrons are transferred from the oxide semiconductor layer to the electrolyte and the reduction reaction of the oxidizing agent in the redox pair proceeds. As a result, the change in the ratio of the redox pair in the electrolyte is sufficiently suppressed, and the durability of the photoelectric conversion element is improved. In addition, according to the photoelectric conversion device of the present invention, in a case where the switching part is controlled by the controlling part so that the electric storage part is charged by switching the switching part to the first state where the voltage output from the voltage conversion part is applied only to the electric storage part as well as in a case where the switching part is controlled by the controlling part so that the electric storage part is discharged and a voltage is applied to the load part by switching the switching part to the second state where the voltage output from the voltage conversion part is not applied to any of the electric storage part and the load part, the photoelectric conversion element is not short-circuited. Therefore, it is sufficiently suppressed that an excessive current is caused to flow in the photoelectric conversion element. Accordingly, according to the photoelectric conversion device of the present invention, it is possible to prevent destruction of the photoelectric conversion element and have excellent durability.

In the photoelectric conversion device, specifically, the switching part includes a first switching element capable of switching a first ON state capable of applying the voltage output from the voltage conversion part to the electric storage part and a first OFF state where the voltage output from the voltage conversion part is not applied to any of the electric storage part and the load part, a second switching element switching a second OFF state where the voltage output from the voltage conversion part is not applied to the load part and a second ON state where the voltage of the electric storage part is applied to the load part, and the controlling part controls so that the electric storage part is discharged and a voltage is applied to the load part by switching the switching part to the second state by controlling the first switching element to the first OFF state and controlling the second switching element to the second state in a case where the voltage of the electric storage part monitored by the voltage monitoring part reaches the full charge voltage of the electric storage part, or so that the electric storage part is charged by switching the switching part to the first state by controlling the first switching element to the first ON state and controlling the second switching element to the second OFF state in a case where the voltage of the electric storage part monitored by the voltage monitoring part becomes less than the full charge voltage of the electric storage part.

In the photoelectric conversion device, it is preferable that the first switching element be a p-channel MOSFET (Metal Oxide Semiconductor Field-Effect Transistor) and the second switching element be a n-channel MOSFET.

In this case, since power consumption in the first switching element and the second switching element is sufficiently small, the power consumption in the entire photoelectric conversion device can be reduced.

In the photoelectric conversion device, it is preferable that the controlling part and the voltage monitoring part be electrically connected, the first switching element have a first gate electrode, the second switching element have a second gate electrode, the first gate electrode and the controlling part be electrically connected, and the controlling part be capable of applying different potentials to the first gate, and the second gate electrode and the controlling part be electrically connected, and the controlling part be capable of applying different potentials to the second gate electrode.

In this case, since the controlling part applies different potentials to the first gate electrode of the first switching element based on the voltage monitored by the voltage monitoring part, the first switching element can be easily switched to the first ON state and the first OFF state. In addition, since the controlling part applies different potentials to the second gate electrode of the second switching element based on the voltage monitored by the voltage monitoring part, the second switching element can be easily switched to the second ON state and the second OFF state.

In the photoelectric conversion device, the electric storage part is, for example, a secondary battery or a capacitor.

In the photoelectric conversion device, the load part is, for example, a resistance element.

EFFECT OF THE INVENTION

According to the present invention, a photoelectric conversion element preventing destruction of a photoelectric conversion device and having excellent durability is provided.

BRIEF DESCRIPTION OF DRAWINGS

Fig. 1 is a circuit diagram illustrating one embodiment of a photoelectric conversion device of the present invention;
Fig. 2 is a circuit diagram illustrating one embodiment of the photoelectric conversion device of the present invention;
Fig. 3 is a circuit diagram illustrating one embodiment of the photoelectric conversion device of the present invention;
Fig. 4 is a cross-sectional view illustrating an example of the photoelectric conversion element of Figs. 1-3;
Fig. 5 is a plan view illustrating a part of the photoelectric conversion element of Fig. 4;
Fig. 6 is a plan view illustrating a pattern of a transparent conductive layer in the photoelectric conversion element of Fig. 4;
Fig. 7 is a plan view illustrating an electrode substrate on which a coupling portion for fixing a back sheet, and an oxide semiconductor layer are formed.
Fig. 8 is a circuit diagram illustrating another embodiment of the photoelectric conversion device of the present invention; and
Fig. 9 is a circuit diagram illustrating another embodiment of the photoelectric conversion device of the present invention.

MODE(S) FOR CARRYING OUT THE INVENTION

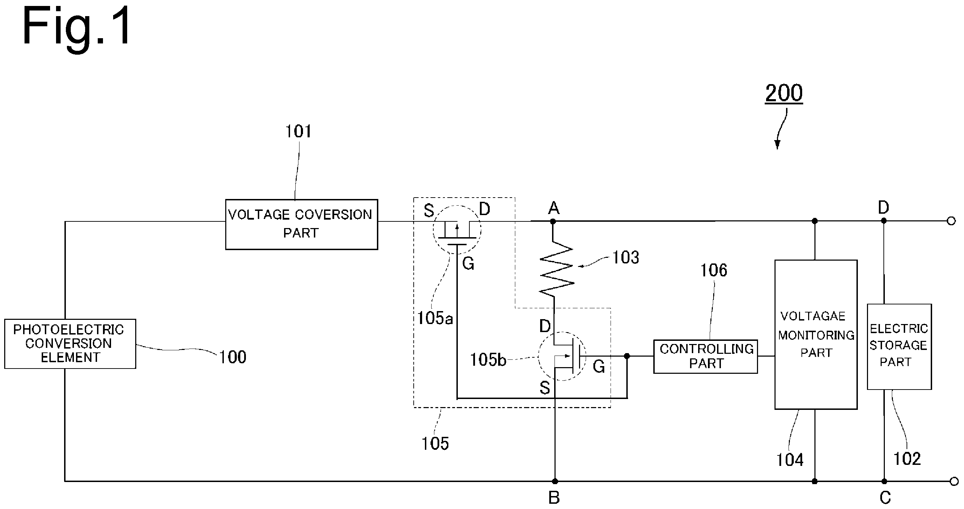

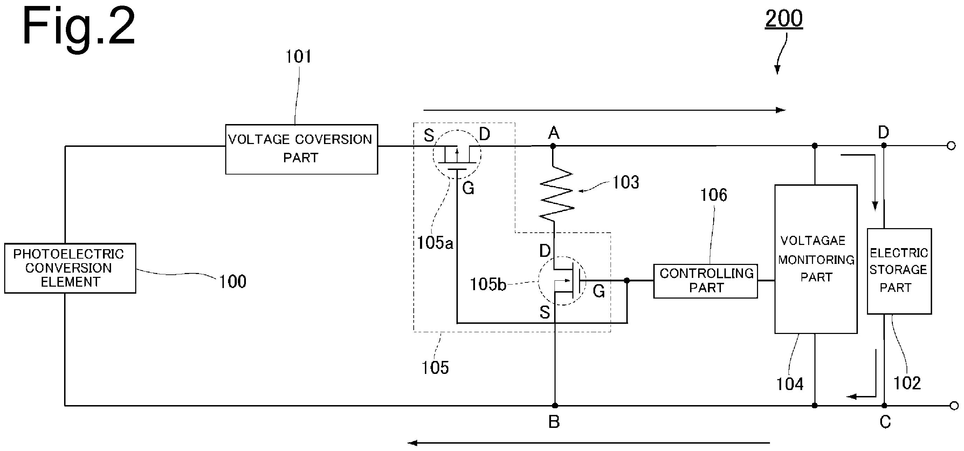

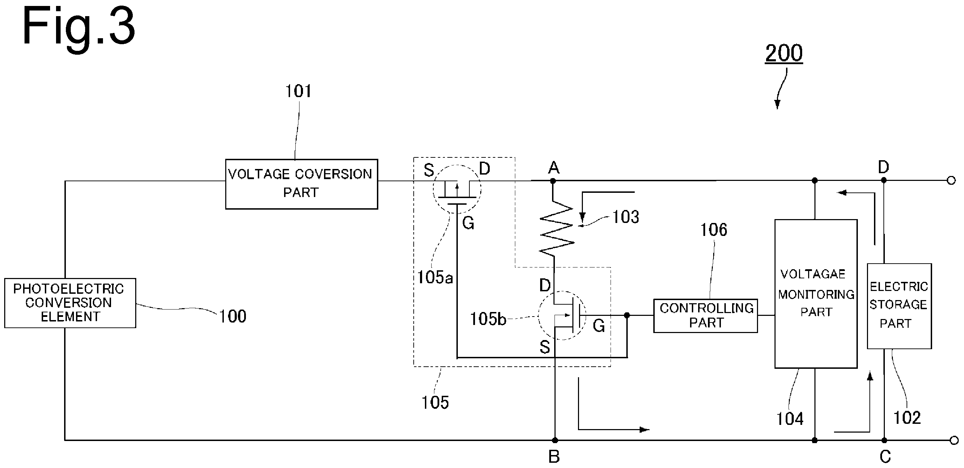

Hereinafter, one embodiment of the photoelectric conversion device of the present invention will be described in detail with reference to the drawings. Figs. 1 to 3 are circuit diagrams illustrating a preferred embodiment of the photoelectric conversion device of the present invention. Fig. 1 illustrates a state where light is not irradiated to the photoelectric conversion element, Fig. 2 is a state where light is irradiated to the photoelectric conversion element and the electric storage part is charged, and Fig. 3 is a state where light is irradiated to the photoelectric conversion element and the electric storage part is discharged.

As illustrated in Fig. 1, a photoelectric conversion device 200 includes a photoelectric conversion element 100; a voltage conversion part 101 boosting a voltage output from the photoelectric conversion element 100; an electric storage part 102 capable of being charged up to a voltage output from the voltage conversion part 101; a load part 103 which is arranged in parallel to the electric storage part 102 and applies a voltage of the electric storage part 102; a voltage monitoring part 104 monitoring the voltage of the electric storage part 102; a switching part 105 switching a first state in which a voltage output from the voltage conversion part 101 is applied only to the electric storage part 102, and a second state in which the voltage output from the voltage conversion part 101 is not applied to any of the electric storage part 102 and the load part 103; and a controlling part 106 controlling the switching part 105 so that the electric storage part 102 is discharged and a voltage is applied to the load part 103 by switching the switching part 105 to the second state in a case where the voltage of the electric storage part 102 monitored by the voltage monitoring part 104 reaches a full charge voltage of the electric storage part 102, and controlling the switching part 105 so that the electric storage part 102 is charged by switching the switching means 105 to the first state in a case where the voltage of the electric storage part 102 monitored by the voltage monitoring part 104 becomes less than the full charge voltage of the electric storage part 102.

It is sufficient that the voltage conversion part 101 is a part boosting a voltage output from the photoelectric conversion element 100. As the voltage conversion part 101, for example, a DC/DC converter can be used.

It is sufficient that the electric storage part 102 is a part capable of being charged up to a voltage boosted by the voltage conversion part 101. As the electric storage part 102, for example, a secondary battery or a capacitor can be used. In addition, the full charge voltage of the electric storage part 102 is less than or equal to the voltage output from the voltage conversion part 101.

It is sufficient that the load part 103 is a part consuming power. Examples of the load part 103 include, for example, a resistance element.

It is sufficient that the voltage monitoring part 104 is a part capable of monitoring a voltage of the electric storage part 102. As the voltage monitoring part 104, for example, a voltage monitoring IC or the like can be used.

Specifically, the switching part 105 includes a first switching element 105a and a second switching element 105b. In this embodiment, the first switching element 105a is composed of a p-channel MOSFET, and the second switching element 105b is composed of a n-channel MOSFET. In the p-channel MOSFET, an electrode (a first gate electrode) is formed on a partial region of a surface of a n-type semiconductor substrate via an oxide film such as silicon oxide, p-type regions are provided on both sides of the partial region, and electrodes are formed on each of the p-type regions. In the n-channel MOSFET, an electrode (second gate electrode) is formed on a partial region of a surface of a p-type semiconductor substrate via an oxide film such as silicon oxide, n-type regions are provided on both sides of the partial region and electrodes are formed on the n-type regions. In addition, in any of the p-channel MOSFET and the n-channel MOSFET, the electrode on the oxide film is a gate electrode, and the electrodes on both sides of the gate electrode are a source electrode and a drain electrode, respectively.

The controlling part 106 is electrically connected to the voltage monitoring part 104. Further, the controlling part 106 is electrically connected to the first gate electrode of the first switching element 105a and is capable of applying different potentials to the first gate electrode. In addition, the controlling part 106 is electrically connected to the second gate electrode of the second switching element 105b and is capable of applying different potentials to the second gate electrode.

The first switching element 105a is capable of switching a first ON state capable of applying the voltage output from the voltage conversion part 101 to any of the electric storage part 102 and the load part 103, and a first OFF state where the voltage output from the voltage conversion part 101 is not applied to any of the electric storage part 102 and the load part 103. Specifically, when a low potential is applied to a gate (G) which is the gate electrode of the first switching element 105a by the controlling part 106, a current flows from a source (S) which is a source electrode to a drain (D) which is a drain electrode since the first switching element 105a is a p-channel MOSFET. Therefore, the first switching element 105a becomes the first ON state capable of applying a voltage output from the voltage conversion part 101 to any of the electric storage part 102 and the load part 103.

On the other hand, when a high potential is applied to a gate (G) of the first switching element 105a by the controlling part 106, a current does not flow from the source (S) to the drain (D) since the first switching element 105a is a p-channel MOSFET. Therefore, the first switching element 105a becomes the first OFF state where a voltage output from the voltage conversion part 101 is not applied to any of the electric storage part 102 and the load part 103.

The second switching element 105b switches a second OFF state where the voltage output from the voltage conversion part 101 is not applied to the load part 103 and a second ON state where the voltage of the electric storage part 102 is applied to the load part 103. Specifically, when a low potential is applied to the gate (G) of the second switching element 105b by the controlling part 106, no current flows from the source (S) to the drain (D) since the second switching element 105b is a n-channel MOSFET. Therefore, the second switching element 105b becomes the second OFF state where the voltage output from the voltage conversion part 101 is not applied to the load part 103.

On the other hand, when a high potential is applied to the gate (G) of the second switching element 105b by the controlling part 106, a current flows from the source (S) to the drain (D) since the second switching element 105b is a n-channel MOSFET. Therefore, the second switching element 105b becomes the second ON state where a voltage of the electrical storage part 102 is applied to the load part 103.

Here, the controlling part 106 makes the electric storage part 102 discharge and makes a voltage apply to the load part 103 by switching the switching part to the second state by controlling the first switching element 105a to the first OFF state and controlling the second switching element 105b to the second ON state in a case where the voltage of the electric storage part 102 monitored by the voltage monitoring part 104 reaches the full charge voltage of the electric storage part 102. Specifically, the first switching element 105a is controlled to the first OFF state and the second switching element 105b is controlled to the second ON state by applying identical high potentials to the gates (G) of the first switching element 105a and the second switching element 105b from the controlling part 106.

On the other hand, in a case where the voltage of the electric storage part 102 monitored by the voltage monitoring part 104 becomes less than the full charge voltage of the electric storage part 102, the controlling part controls so that the electric storage part 102 is charged by switching the switching part to the first state by controlling the first switching element 105a to the first ON state and controlling the second switching element 105b to the second OFF state. Specifically, the first switching element 105a is controlled to the first ON state and the second switching element 105b is controlled to the second OFF state by applying identical low potentials to the gates (G) of the first switching element 105a and the second switching element 105b from the controlling part 106.

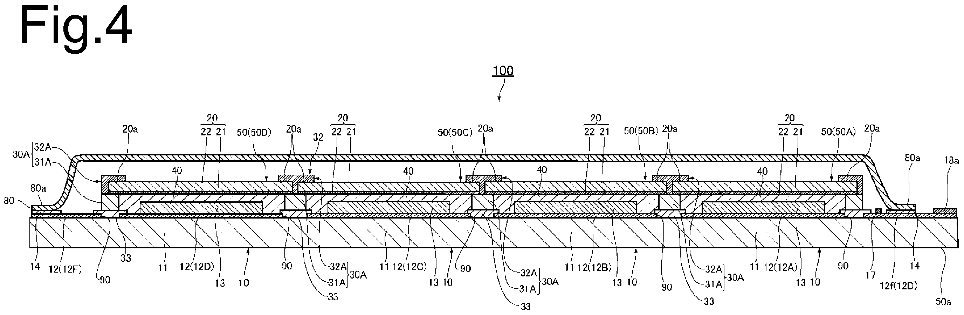

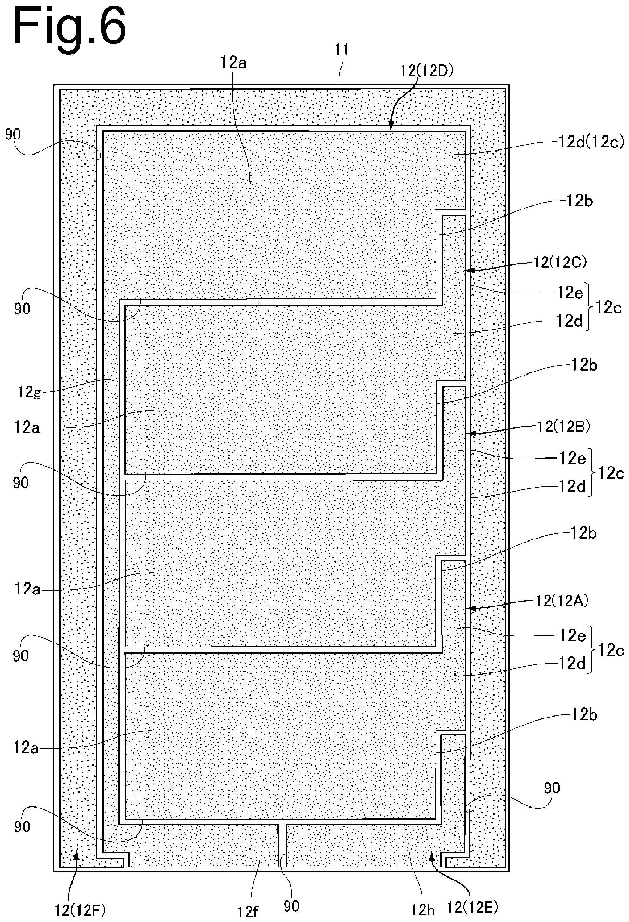

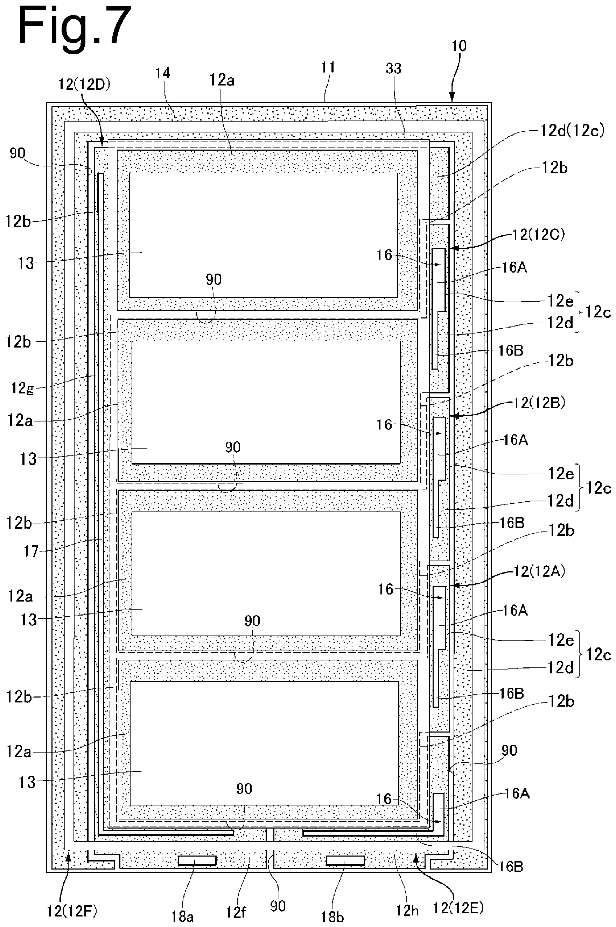

Fig. 4 is an end view of a cut surface illustrating one example of the photoelectric conversion element of Figs. 1-3, Fig.5 is a plan view illustrating a part of the photoelectric conversion element of Fig. 4, Fig. 6 is a plan view illustrating a pattern of a transparent conductive layer in the photoelectric conversion element of Fig. 4 and Fig. 7 is a plan view illustrating an electrode substrate on which a coupling portion for fixing a back sheet, and an oxide semiconductor layer are formed.

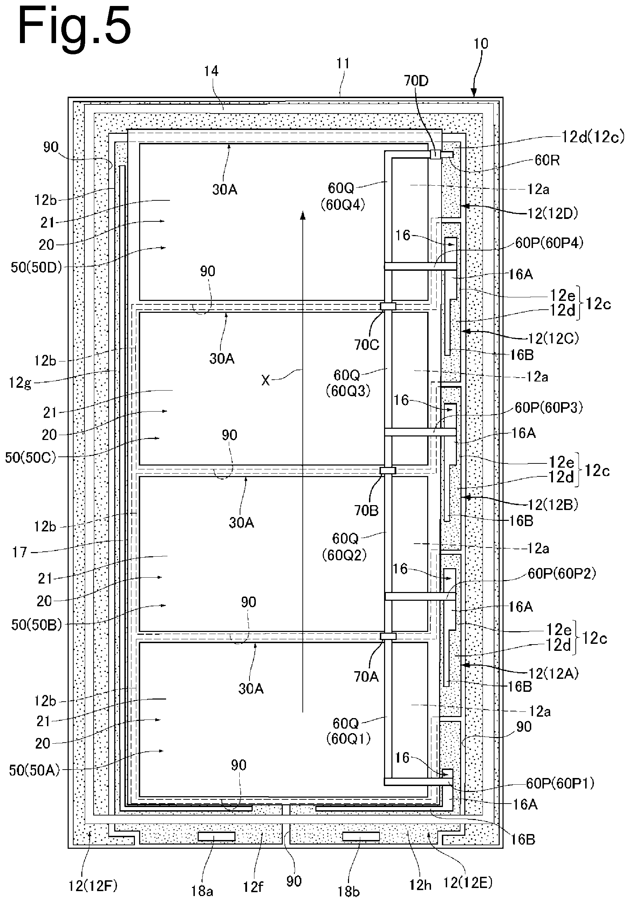

As illustrated in Fig. 4, the photoelectric conversion device 100 includes a plurality (four in Fig. 4) of photoelectric conversion cells (hereinafter referred to as "cells" in some cases) 50; and a back sheet 80 provided so as to cover a surface of the cell 50 on the side opposite to the light incident surface 50a. As illustrated in Fig. 5, the plurality of cells 50 are connected in series by wiring materials 60P. Hereinafter, for convenience of explanation, the four cells 50 in the photoelectric conversion element 100 can be referred to as cells 50A to 50D.

As illustrated in Fig. 4, each of the plurality of cells 50 includes an electrode substrate 10; a counter electrode 20 facing the electrode substrate 10; an oxide semiconductor layer 13 provided on the electrode substrate 10; a dye supported on the oxide semiconductor layer 13; a ring-shaped sealing portion 30A bonding the electrode substrate 10 and the counter substrate 20; and an electrolyte 40 which is disposed in a cell space formed by the electrode substrate 10, the counter substrate 20 and the ring-shaped sealing portion 30A and which contains a redox pair.

The counter substrate 20 includes a conductive substrate 21 and a catalyst layer 22 which is provided on a side of the conductive substrate 21 facing the electrode substrate 10 and promotes a catalyst reaction.

As illustrated in Figs. 4 and 5, the electrode substrate 10 includes a transparent substrate 11; a transparent conductive layer 12 provided on the transparent substrate 11; an insulating material 33 provided on the transparent substrate 11; and a connecting terminal 16 provided on the transparent conductive layer 12. The transparent substrate 11 is used as a common transparent substrate of the cells 50A to 50D.

As illustrated in Figs. 4 and 5, the transparent conductive layer 12 is composed of transparent conductive layers 12A to 12F which are provided in a state insulated from each other. That is, the transparent conductive layers 12A to 12F are arranged with a groove (90) interposed therebetween. Here, the transparent conductive layers 12A to 12D constitute the transparent conductive layers 12 of the plurality of cells 50A to 50D, respectively. The transparent conductive layer 12F is the ring-shaped transparent conductive layer 12 for fixing a peripheral edge part 80a of the back sheet 80 (see Fig. 4).

As illustrated in Fig. 6, any of the transparent conductive layers 12A to 12D include a quadrangular main body portion 12a having side edge parts 12b and a protruding part 12c protruding laterally from the side edge part 12b of the main body portion 12a.

As illustrated in Fig. 5, the protruding portion 12c of the transparent conductive layer 12C among the transparent conductive layers 12A to 12D has a projecting portion 12d which laterally projects with respect to the arrangement direction X of the cells 50A to 50D and a facing portion 12e which extends from the projecting portion 12d and faces the main body portion 12a of the adjacent cell 50D via the groove 90.

In the cell 50B as well, the protruding portion 12c of the transparent conductive layer 12B has the projecting portion 12d and the facing portion 12e. In addition, in the cell 50A as well, the protruding portion 12c of the transparent conductive layer 12A has the projecting portion 12d and the facing portion 12e.

In addition, the cell 50D is already connected to the cell 50C and there is no other cell 50 to be connected. For this reason, in the cell 50D, the protruding portion 12c of the transparent conductive layer 12D does not have a facing portion 12e. In other words, the protruding portion 12c of the transparent conductive layer 12D is composed of only the projecting portion 12d.

However, the transparent conductive layer 12D further has a first current extracting portion 12f for extracting the current generated in the photoelectric conversion element 100 to the outside and a connecting portion 12g which connects the first current extracting portion 12f and the main body portion 12a and extends along the side edge portion 12b of the transparent conductive layers 12A to 12C. The first current extracting portion 12f is disposed in the vicinity of the cell 50A and on a side of the transparent conductive layer 12A facing in the opposite direction from the transparent conductive layer 12B.

On the other hand, the transparent conductive layer 12E also includes a second current extracting portion 12h for extracting the current generated by the photoelectric conversion element 100 to the outside, and the second current extracting portion 12h is arranged in the vicinity of the cell 50A and on a side of the transparent conductive layer 12A facing in the opposite direction from the transparent conductive layer 12B. The first current extracting portion 12f and the second current extracting portion 12h are arranged to be adjacent to each other via the groove 90 in the vicinity of the cell 50A.

In addition, the connecting terminal 16 is provided on each of the protruding portions 12c of the transparent conductive layers 12A to 12C and the transparent conductive layer 12E. Each connecting terminal 16 has a wiring material connecting portion 16A which is connected to the wiring material 60P and is provided outside the sealing portion 30A and a wiring material non-connecting portion 16B which is connected to the wiring material connecting portion 16A outside the sealing portion 30A.

On the other hand, as illustrated in Fig. 5, four wiring materials 60P (hereinafter, in some cases, referred to as wiring material 60P1 to 60P4, respectively) is provided on a side of the electrode substrate 10 facing the sealing portion 30A. One end of the wiring material 60P1 is connected to the conductive substrate 21 of the cell 50A and the other end of the wiring material 60P1 is connected to the wiring material connecting portion 16A of the connecting terminal 16 on the transparent conductive layer 12E. Similarly, one end of the wiring material 60P2 is connected to the conductive substrate 21 of the cell 50B and the other end of the wiring material 60P2 is connected to the wiring material connecting portion 16A of the connecting terminal 16 on the transparent conductive layer 12A. One end of the wiring material 60P3 is connected to the conductive substrate 21 of the cell 50C and the other end of the wiring material 60P3 is connected to the wiring material connecting portion 16A of the connecting terminal 16 on the transparent conductive layer 12B. One end of the wiring material 60P4 is connected to the conductive substrate 21 of the cell 50D and the other end of the wiring material 60P4 is connected to the wiring material connecting portion 16A of the connecting terminal 16 on the transparent conductive layer 12C.

In addition, external connecting terminals 18a and 18b are provided on the first current extracting portion 12f and the second current extracting portion 12h, respectively.

As illustrated in Fig. 4, the sealing portion 30A, which includes a resin, includes a ring-shaped first sealing portion 31A provided between the electrode substrate 10 and the counter substrate 20; and a second sealing portion 31A which is provided to overlap with the first sealing portion 31A and sandwiches the edge portion 20a of the counter substrate 20 together with the first sealing portion 31A. Sealing portions 30A of the adjacent two cells 50 are integrated with each other.

In addition, as illustrated in Fig. 4, an insulating material 33 is provided between the sealing portion 31A and the groove 90 so as to enter the groove 90 between the transparent conductive layers 12A to 12F adjacent to each other and straddle the adjacent transparent conductive layers 12. Specifically, the insulating material 33 enters a groove 90 formed along an edge portion of the main body portion 12a of the transparent conductive layer 12 of the groove 90 and covers the edge portion of the main body portion 12a which forms the groove 90.

As illustrated in Fig. 4, the back sheet 80 is provided on the electrode substrate 10. The back sheet 80 includes a laminate including a weather-resistant layer and a metal layer. The peripheral part 80a of the back sheet 80 is connected to the transparent conductive layers 12D, 12E and 12F among the transparent conductive layers 12 via a coupling portion 14.

In addition, in the transparent conductive layer 12D, a current collecting wiring 17 having a lower resistance than that of the transparent conductive layer 12D extends so as to pass through the main body portion 12a, the connecting portion 12g, and the current extracting portion 12f (see Fig. 5).

In addition, as illustrated in Fig. 5, bypass diodes 70A to 70D are provided on the sealing portions 30A of the cells 50A to 50D, respectively. On the other hand, the wiring material 60P1 and the bypass diode 70A are connected by the wiring material 60Q(60Q1), the bypass diode 70A and the bypass diode 70B are connected by the wiring material 60Q(60Q2), the bypass diode 70B and the bypass diode 70C are connected by the wiring material 60Q(60Q3) and the bypass diode 70C and the bypass diode 70D are connected by the wiring material 60Q(60Q4). The wiring material 60Q2 is connected to the wiring material 60P2, the wiring material 60Q3 is connected to the wiring material 60P3 and the wiring material 60Q4 is connected to the wiring material 60P4. The bypass diode 70D is connected to the projecting portion 12d of the transparent conductive layer 12D of the cell 50D via the wiring material 60R. Accordingly, the bypass diodes 70A to 70D are connected in parallel to the cells 50A to 50D, respectively.

According to the photoelectric conversion device 200, when light is irradiated to the photoelectric conversion element 100, power generation is performed in the photoelectric conversion element 100. Then, the voltage output from the photoelectric conversion element 100 is boosted at the voltage conversion part 101. At this time, in a case where the voltage of the electric storage part 102 monitored by the voltage monitoring part 104 is less than the full charge voltage of the electric storage part 102, the switching part 105 is controlled by the controlling part 106 so that the electric storage part 102 is charged by switching the switching part to the first state where the voltage output from the voltage conversion part 101 is applied only to the electric storage part 102 (see Fig.2). Specifically, the switching part 105 is controlled so that the electric storage part 102 is charged by switching the switching part to the first state by controlling the first switching element 105a to the first ON state where the voltage output from the voltage conversion part 101 can be applied to any of the electric storage part 102 and the load part 103 and controlling the second switching element 105b to the second OFF state where the voltage output from the voltage conversion part 101 is not applied to the load part 103.

In a case where the voltage of the electric storage part 102 monitored by the voltage monitoring part 104 reaches the full charge voltage of the electric storage part 102, the switching part 105 is immediately controlled by the controlling part 106 so that the electric storage part 102 is discharged and a voltage is applied to the load part 103 by switching the switching part to the second state where the voltage output from the voltage conversion part 101 is not applied to any of the electric storage part 102 and the load part 103 (see Fig.3). Specifically, the switching part 105 is controlled so that the electric storage part 102 is discharged by switching the switching part to the first state by controlling the first switching part 105a to the first OFF state where the voltage output from the voltage conversion part 101 is not applied to any of the electric storage part 102 and the load part 103 and by controlling the second switching element 105b to the second ON state where the voltage of the electric storage part 102 is applied to the load part 103. In this case, since the electric storage part 102 and the load part 103 are connected in parallel, the voltage of the electric storage part 102 is applied to the load part 103 in a closed circuit connecting points A, B, C and D. That is, the electric storage part 102 is discharged.

In a case where the voltage of the electric storage part 102 monitored by the voltage monitoring part 104 becomes less than the full charge voltage of the electric storage part 102, the switching part 105 is immediately controlled by the controlling part 106 so that the electric storage part 102 is charged by switching the switching part to the first state where the voltage output from the voltage conversion part 101 is applied only to the electric storage part 102.

Thus, it is sufficiently suppressed that the photoelectric conversion element 100 is in an open circuit state over a long period of time. Therefore, it is sufficiently suppressed that after electrons generated by photoexcitation of the dye are charged to the conduction band of the oxide semiconductor layer 13, electrons are transferred from the oxide semiconductor layer 13 to the electrolyte 40 to proceed the reduction reaction of the oxidizing agent in the redox pair. As a result, the change in the ratio of the redox pair in the electrolyte 40 is sufficiently suppressed, and the durability of the photoelectric conversion element 100 is improved. In addition, according to the photoelectric conversion device 200, in a case where the switching part 105 is controlled by the controlling part 106 so that the electric storage part 102 is charged by switching the switching part to the first state where the voltage output from the voltage conversion part 101 is applied only to the electric storage part 102 as well as in a case where the switching part 105 is controlled by the controlling part 106 so that the electric storage part 102 is discharged and a voltage is applied to the load part 103 by switching the switching part to the second state where the voltage output from the voltage conversion part 101 is not applied to any of the electric storage part 102 and the load part 103, the photoelectric conversion element 100 is not short-circuited. Therefore, it is sufficiently suppressed that an excessive current is caused to flow in the photoelectric conversion element 100. Accordingly, according to the photoelectric conversion device 200, it is possible to prevent destruction of the photoelectric conversion element 100 and have excellent durability.

In the photoelectric conversion device 200, since the first switching element 105a is a p-type MOSFET and the second switching element 105b is a n-channel MOSFET, the power consumption in the first switching element 105a and the second switching element 105b is sufficiently small. Therefore, power consumption in the entire photoelectric conversion device 200 can be reduced.

Further, in the photoelectric conversion device 200, the controlling part 106 is electrically connected to the voltage monitoring part 104. In addition, the controlling part 106 is electrically connected to the gate (G) of the first switching element 105a and is capable of applying different potentials to the gate (G). Moreover, the controlling part 106 is electrically connected to the gate (G) of the second switching element 105b and is capable of applying different potentials to the gate (G).

Therefore, the first switching element 105a can be easily switched to the first ON state and the first OFF state since the controlling part 106 applies different potentials to the gate (G) of the first switching element 105a based on the voltage monitored by the voltage monitoring part 104. In addition, the second switching element 105b can be easily switched to the second ON state and the second OFF state since the controlling part 106 applies different potentials to the gate (G) of the second switching element 105b based on the voltage monitored by the voltage monitoring part 104.

The present invention is not limited to the above embodiment. For example, in the above embodiment, the photoelectric conversion element 100 includes a plurality of cells 50. However, the photoelectric conversion element 100 may include only one cell 50.

Further, in the above embodiment, the first switching element 105a and the second switching element 105b may be formed of another FET such as a junction-type FET instead of the MOSFET.

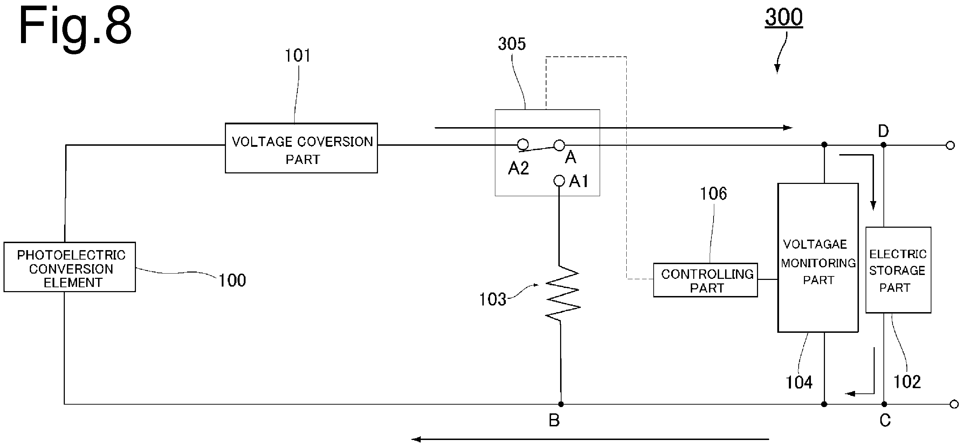

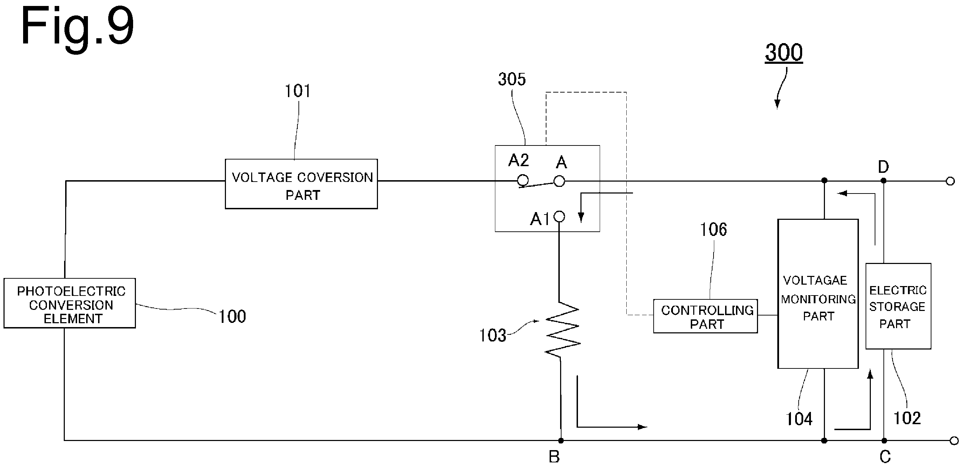

Furthermore, in the above embodiment, the first switching element 105a and the second switching element 105b are used as the switching part 105. However, as in a photoelectric conversion device 300 illustrated in Figs.8 and 9, a switching part 305 may be used in place of the switching part 105. The switching part 305 switches a state in which the point A and the point A1 are brought into conduction with each other and a state in which the point A and the point A2 are brought into conduction with each other, by the controlling part 106. Fig. 8 illustrates a state where light is irradiated to the photoelectric conversion element 100 and the electric storage part 102 are charged. Fig.9 illustrates a state where light is irradiated to the photoelectric conversion element 100 and the electric storage part 102 are discharged. In a case where the voltage of the electric storage part 102 monitored by the voltage monitoring part 104 reaches the full charge voltage of the electric storage part 102, the switching part 305 is controlled so that the electric storage part 102 is discharged and a voltage is applied to the load part 103 by switching the switching part to a second state (namely, a state where the point A and the point A1 are brought into conduction with each other). In a case where the voltage of the electric storage part 102 monitored by the voltage monitoring part 104 becomes less than the full charge voltage of the electric storage part 102, the switching part 305 is controlled so that the electric storage part 102 is charged by switching the switching part to a first state (namely, a state where the point A and the point A2 are brought into conduction with each other). In this case as well, it is sufficiently suppressed that the photoelectric conversion element 100 is in an open-circuit state. As a result, electrons generated by photoexcitation of the dye is sufficiently suppressed from being charged into the conduction band of the oxide semiconductor layer 13. As a result, the change in the ratio of the redox pair in the electrolyte 40 is sufficiently suppressed, and durability of the photoelectric conversion element 100 is improved. In addition, according to the photoelectric conversion device 300, in a case where the switching part 105 is controlled by the controlling part 106 so that the electric storage part 102 is charged by switching the switching part to the first state where the voltage output from the voltage conversion part 101 is applied only to the electric storage part 102 as well as in a case where the switching part 105 is controlled by the controlling part 106 so that the electric storage part 102 is discharged and a voltage is applied to the load part 103 by switching the switching part to the second state where the voltage output from the voltage conversion part 101 is not applied to any of the electric storage part 102 and the load part 103, the photoelectric conversion element 100 is not short-circuited. Therefore, it is sufficiently suppressed that an excessive current is caused to flow in the photoelectric conversion element 100. Accordingly, according to the photoelectric conversion device 300, it is possible to prevent destruction of the photoelectric conversion element 100 and have excellent durability. In addition, as the switching part 305, for example, a two-input one-output multiplexer load switch can be used.

In the above embodiment, in the photoelectric conversion element 100, a second sealing portion 32A is adhered to the first sealing portion 31A. However, the second sealing portion 32A may not be adhered to the first sealing portion 31A.

Furthermore, in the above embodiment, the sealing portion 30A includes the first sealing portion 31A and the second sealing portion 32A in the photoelectric conversion element 100. However, the second sealing portion 32A may be omitted.

Further, in the above embodiment, the groove 90 is formed in the transparent conductive layer 12 and the insulating material 33 enters the groove 90 in the photoelectric conversion element 100. However, the insulating material 33 does not necessarily enter the groove 90, and the groove 90 is not necessarily formed in the transparent conductive layer 12. For example, in a case where the photoelectric conversion element 100 has only one photoelectric conversion cell, it is not necessary to form the groove 90 in the transparent conductive layer 12. In this case, the insulating material 33 does not enter the groove 90.

In the above embodiment, the back sheet 80 and the transparent conductive layer 12 are connected to each other via the coupling portion 14 in the photoelectric conversion element 100. However, the back sheet 80 and the transparent conductive layer 12 are not necessarily adhered to each other via the coupling portion 14.

In the embodiment, the photoelectric conversion element 100 includes the back sheet 80. However, the photoelectric conversion element 100 does not necessarily have the back sheet 80.

Further, in the above embodiment, the counter substrate 20 includes the conductive substrate 21 and the catalyst layer 22. However, the counter substrate 20 may be composed of an insulating substrate. In this case, however, a counter electrode is provided on the oxide semiconductor layer 13. A porous insulating layer is provided between the oxide semiconductor layer 13 and the counter electrode. The porous insulating layer is used mainly for impregnating the electrolyte 40 inside. As such a porous insulating layer, for example, a fired body of an oxide can be used. In addition, the porous insulating layer may be provided between the electrode substrate 10 and the counter electrode so as to surround the oxide semiconductor layer 13.

Furthermore, in the above embodiment, a plurality of cells 50 are connected in series by the wiring materials 60P in the photoelectric conversion element 100, but they may be connected in parallel.

Examples

Hereinafter, the content of the present invention will be described more specifically with reference to examples, the present invention is not limited to the following examples.

(Example 1)

First, a photoelectric conversion element was manufactured in the following manner.

First, a laminate obtained by forming a transparent conductive layer composed of FTO (Fluorine-doped Tin Oxide) having a thickness of 1 $\mu$m on a transparent substrate which is composed of glass and has a thickness of 1 mm was prepared. Next, as illustrated in Fig. 6, the groove 90 was formed in the transparent conductive layer by a $CO_2$ laser (V-460 manufactured by Universal Laser Systems Inc.) to form the transparent conductive layers 12A to 12F. At this time, the width of the groove 90 was set to 1 mm. In addition, each of the transparent conductive layers 12A to 12C was formed so as to have the main body portion having a quadrangular shape of 4.6 cm $\times$ 2.0 cm and the protruding portion protruding from the side edge portion of one side of the main body portion. In addition, the transparent conductive layer 12D was formed so as to have the main body portion having a quadrangular shape of 4.6 cm $\times$ 2.1 cm and the protruding portion protruding from the side edge portion of one side of the main body portion. In addition, the protruding portion 12c of the three transparent conductive layers 12A to 12C among the transparent conductive layers 12A to 12D was constituted by the projecting portion 12d projecting from the one side edge portion 12b of the main body portion 12a and the facing portion 12e which was extended from the projecting portion 12d and faced the main body portion 12a of the adjacent transparent conductive layer 12. In addition, the protruding portion 12c of the transparent conductive layer 12D was constituted only by only the projecting portion 12d projecting from the one side edge portion 12b of the main body portion 12a. At this time, the length of the projecting direction (the direction orthogonal to the X direction in Fig. 5) of the projecting portion 12d was set to 2.1 mm and the width of the projecting portion 12d was set to 9.8 mm. In addition, the width of the facing portion 12e was set to 2.1 mm and the length of the facing portion 12e in the extending direction was set to 9.8 mm.

In addition, the transparent conductive layer 12D was formed so as to have not only the main body portion 12a and the protruding portion 12c but also the first current extracting portion 12f and the connecting portion 12g connecting the first current extracting portion 12f and the main body portion 12a. The transparent conductive layer 12E was formed so as to have the second current extracting portion 12h. At this time, the width of the connecting portion 12g was set to 1.3 mm and the length thereof was set to 59 mm. In addition, when the resistance value of the connecting portion 12g was measured by a four probe method, it was 100 $\Omega$.

Next, a precursor of the connecting terminal 16 constituted by the wiring material connecting portion 16A and the wiring material non-connecting portion 16B was formed on the protruding portion 12c of the transparent conductive layers 12A to 12C. Specifically, the precursor of the connecting terminal 16 was formed such that a precursor of the wiring material connecting portion 16A was provided on the facing portion 12e and a precursor of the wiring material non-connecting portion 16B was provided on the projecting portion 12d. At this time, the precursor of the wiring material non-connecting portion 16B was formed so as to be narrower than the width of the wiring material connecting portion 16A. The precursor of the connecting terminal 16 was formed by applying a silver paste ("GL-6000X16" manufactured by FUKUDA METAL FOIL & POWDER Co., LTD.) by screen printing and drying it.

Furthermore, a precursor of the current collecting wiring 17 was formed on the connecting portion 12g of the transparent conductive layer 12D. The precursor of the current collecting wiring 17 was formed by applying the silver paste by screen printing and drying it.

In addition, precursors of the external connecting terminals 18a and 18b for extracting the current to the outside were formed on the first current extracting portion 12f and the second current extracting portion 12h of the transparent conductive layer 12A, respectively. The precursors of the external connecting terminals were formed by applying the silver paste by screen printing and drying it.

Moreover, a precursor of the insulating material 33 composed of a glass frit was formed so as to enter into the groove 90 and to cover the edge portion of the main body portion 12a forming the groove 90. The insulating material 33 was formed by applying a paste containing a glass frit by screen printing and drying it. At this time, the edge portion of the transparent conductive layer covered with the insulating material 33 was the part between the groove 90 and the position 0.2 mm away from the groove 90.

In addition, in order to fix the back sheet 80, in the same manner as the insulating material 33, a precursor of the ring-shaped coupling portion 14 composed of a glass frit was formed so as to surround the insulating material 33 and to pass through the transparent conductive layer 12D, the transparent conductive layer 12E, and the transparent conductive layer 12F. In addition, at this time, the precursor of the coupling portion 14 was formed such that the precursor of the current collecting wiring 17 was disposed on the inner side thereof. In addition, the coupling portion 14 was formed such that the first current extracting portion and the second current extracting portion were disposed on the outer side thereof. The coupling portion 14 was formed by applying a paste containing a glass frit by screen printing and drying it.

Furthermore, a precursor of the oxide semiconductor layer 13 was formed on the main body portion 12a of each of the transparent conductive layers 12A to 12D. At this time, the precursor of the oxide semiconductor layer 13 was obtained by applying a nanoparticle paste of a titanium oxide for forming a light absorbing layer containing an anatase crystalline titanium oxide (21NR manufactured by JGC Catalysts and Chemicals Ltd.) in a square shape by screen printing and drying it at 150°C for 10 minutes.

Next, the precursor of the connecting terminal 16, the precursor of the current collecting wiring 17, the precursors of the external connecting terminals 18a and 18b, the precursor of the insulating material 33, the precursor of the coupling portion 14, the precursor of the insulating material 33, and the precursor of the oxide semiconductor layer 13 were fired at 500°C for 15 minutes to form the connecting terminal 16, the current collecting wiring 17, the external connecting terminals 18a and 18b, the coupling portion 14, the insulating material 33, and the oxide semiconductor layer 13. In this manner, the electrode substrate 10 on which the oxide semiconductor layer 13, the coupling portion 14, the current collecting wiring 17 and the external connecting terminals 18a, 18b were formed. At this time, the width of the wiring material connecting portion of the connecting portion 16 was 1.0 mm and the width of the wiring material non-connecting portion thereof was 0.3 mm. In addition, the length along the extending direction of the wiring material connecting portion was 7.0 mm and the length along the extending direction of the wiring material non-connecting portion was 7.0 mm. In addition, the dimensions of the current collecting wiring 17, the external connecting terminals 18a and 18b, the coupling portion 14, and the oxide semiconductor layer 13 were as follows, respectively.

Current collecting wiring 17: 4 $\mu$m in thickness, 200 $\mu$m in width, 79 mm in length along the X direction in Fig. 5, and 21 mm in length along the direction orthogonal to the X direction in Fig. 5,

External connecting terminals 18a and 18b: 20 $\mu$m in thickness, 2 $\mu$m in width, and 7 mm in length,

Coupling portion 14: 50 $\mu$m in thickness, 3 mm in width, and Oxide semiconductor layer 13: 14 $\mu$m in thickness, 17 mm in length in the X direction in Fig. 5, and 42.1 mm in length in the direction orthogonal to the X direction in Fig. 5

Thus, the working electrode was obtained.

Next, the working electrode obtained in the above-described manner was immersed for a whole day and night in a dye solution containing 0.2 mM of a photosensitizing dye consisting of N719 and a mixed solvent prepared by mixing acetonitrile and tert-butanol at a volume ratio of 1 : 1 as the solvent, and then taken out therefrom and dried, and thus the photosensitizing dye was supported on the oxide semiconductor layer.

Next, an electrolyte obtained by adding $I_2$, methyl benzimidazole, butyl benzimidazole, guanidium thiocyanate, and t-butylpyridine to a mixture of dimethyl propyl imidazolium iodide and 3-methoxy propionitrile was applied on the oxide semiconductor layer by a screen printing method and drying was performed. Thus, the electrolyte was arranged.

Next, the first integrated sealing portion forming body for forming the first sealing portion was prepared. The first integrated sealing portion forming body was obtained by preparing one sheet of resin film for sealing which had 8.0 cm $\times$ 4.6 cm $\times$ 50 $\mu$m and was composed of a maleic anhydride-modified polyethylene (product name: Bynel produced by DuPont) and forming four quadrangular-shaped openings in the resin film for sealing. At this time, the first integrated sealing portion forming body was fabricated such that each opening had a size of 1.7 cm $\times$ 4.4 cm $\times$ 50 $\mu$m, the width of the ring-shaped outer peripheral portion was 2 mm, and the width of the partitioning portion partitioning the inner opening of the ring-shaped outer peripheral portion was 2.6 mm.

Thereafter, the first integrated sealing portion forming body was superimposed on the insulating material 33 on the working electrode and then the first integrated sealing portion forming body was adhered to the insulating material 33 on the working electrode by heating to melt.

Next, four sheets of the counter electrodes were prepared. Two counter electrodes of the four sheets of the counter electrodes were prepared by forming the catalyst layer which had a thickness of 5 nm and was composed of platinum on the titanium foil of 4.6 cm $\times$ 1.9 cm $\times$ 40 $\mu$m by a sputtering method. The remaining two counter electrodes of the four sheets of the counter electrodes were prepared by forming the catalyst layer which had a thickness of 5 nm and was composed of platinum on the titanium foil of 4.6 cm $\times$ 2.0 cm $\times$ 40 $\mu$m by the sputtering method. In addition, another first integrated sealing portion forming body was prepared and this first integrated sealing portion forming body was adhered to the surface of the counter electrode facing the working electrode in the same manner as above.

Thereafter, the first integrated sealing portion forming body adhered to the working electrode was allowed to face the first integrated sealing portion forming body adhered to the counter electrode, and thus the first integrated sealing portion forming bodies were superimposed on each other. The first integrated sealing portion forming bodies were then melted by heating while being pressurized in this state. The first sealing portion was thus formed between the working electrode and the counter electrode.

Next, the second integrated sealing portion was prepared. The second integrated sealing portion was obtained by preparing one sheet of resin film for sealing which had 8.0 cm $\times$ 4.6 cm $\times$ 50 $\mu$m and was composed of maleic anhydride modified polyethylene (trade name: Bynel, manufactured by Du Pont) and forming four quadrangular-shaped openings in the resin film for sealing. At this time, the second integrated sealing portion was fabricated such that each opening had a size of 1.7 cm $\times$ 4.4 cm $\times$ 50 $\mu$m, the width of the ring-shaped outer peripheral portion was 2 mm, and the width of the partitioning portion partitioning the inner opening of the ring-shaped outer peripheral portion was 2.6 mm. The second integrated sealing portion was bonded to the counter electrode so as to sandwich the edge portion of the counter electrode together with the first integrated sealing portion. At this time, the second integrated sealing portion was bonded to the counter electrode and the first integrated sealing portion by heating the first integrated sealing portion and the second integrated sealing portion to melt while being pressed to the counter electrode.

Next, the desiccant sheet was bonded on the metal substrate of each counter electrode with a double-sided tape. The dimensions of the desiccant sheet were 1 mm in thickness × 3 cm in length × 1 cm in width, and Zeosheet (trade name, manufactured by Shinagawa Chemicals Co., Ltd.) was used as the desiccant sheet.

Next, silver particles (average particle diameter: 3.5 $\mu$m), carbon (average particle diameter: 500 nm) and a polyester-based resin were dispersed in diethylene glycol monoethyl ether acetate which is a solvent to fabricate a first conductive paste. At this time, the silver particles, carbon, the polyester-based resin and the solvent were mixed in a mass ratio of 70 : 1 : 10 : 19. Then, this first conductive paste was coated on each of the conductive substrates 21 of the cells 50A to 50D so as to have dimensions of 2 mm × 2 mm × 50 $\mu$m and temporarily dried at 85°C for 10 minutes. A precursor of the first connecting portion was thus obtained.

On the other hand, silver particles (average particle diameter: 2 $\mu$m) and a polyester-based resin were dispersed in ethylene glycol monobutyl ether to fabricate a second conductive paste. At this time, the silver particles, the polyester-based resin, and the solvent were mixed at a mass ratio of 65 : 10 : 25.

Then, the second conductive paste was coated so as to connect the wiring material connecting portions on the four transparent conductive layers 12A to 12C and 12E with the precursor of the first connecting portion formed on each of the conductive substrates 21 of the cells 50A to 50D, respectively, and cured to form the wiring material 60P having a width of 2 mm. At this time, the wiring material 60P was formed by curing the second conductive paste at 85°C for 12 hours.

Then, as illustrated in Fig. 5, the bypass diodes 70A to 70D were disposed on the second integrated sealing portion, and the wiring material 60Q having a width of 2 mm was formed on the conductive substrate 21 of the counter electrode so as to connect each of the bypass diodes 70A to 70D with the precursor of the first connecting portion of each of the cells 50A to 50D. The wiring material 60Q was formed by coating the second conductive paste and curing it through a heat treatment at 85°C for 12 hours. At this time, the first connecting portion was obtained from the precursor of the first connecting portion. As the bypass diodes 70A to 70D, the RB751V-40 manufactured by ROHM Co., Ltd. was used.

Next, the butyl rubber ("Aikameruto" manufactured by Aica Kogyo Co., Ltd.) was coated on the coupling portion 14 with a dispenser while being heated at 200°C. On the other hand, a laminate, which was obtained by laminating a polybutylene terephthalate (PBT) resin film (50 $\mu$m in thickness), aluminum foil (25 $\mu$m in thickness), and a film (50 $\mu$m in thickness) composed of Bynel (trade name, manufactured by Du Pont) in this order, was prepared. Then, the peripheral portion of this laminate was superimposed on the butyl rubber, and was pressurized for 10 seconds. In this manner, the back sheet 80 constituted by the laminate was obtained on the coupling portion 14. The photoelectric conversion element was obtained in the manner described above.

Next, a photoelectric conversion device was manufactured so as to constitute a circuit illustrated in Fig. 1, using the photoelectric conversion element 100 obtained as described above. At this time, in the photoelectric conversion element 100, the first external output terminal 18a was used as a terminal on the positive electrode side, and the second external output terminal 18b was used as a terminal on the negative electrode side.

As the voltage conversion part 101, the electric storage part 102, the load part 103, the voltage monitoring part 104, the first switching element 105a, the second switching element 105b, and the controlling part 106, the followings were used, respectively. At this time, as the controlling part 106, the controlling part was used which applies a potential of 3.0 V to the gates of the first switching element 105a and the second switching element 105b when the voltage of the storage part 102 reaches the full charge voltage, applies a potential of 0 V to the gates of the first switching element 105a and the second switching element 105b when the voltage of the electric storage part 102 becomes less than the full charge voltage.

Voltage conversion part 101: DC/DC converter (product name: "dq25570", manufactured by Texas Instruments Inc. output voltage after boosting: 3.0 V)

Electric storage part 102: coin type manganese lithium secondary battery (product name "ML2430", manufactured by FDK CORPORATION, full charge voltage: 3.0 V)

Load part 103: a resistance element having a resistance of 30$\Omega$

Voltage monitoring part 104 and controlling part 106: a voltage detector (product name "S-1009 series", manufactured by SII semiconductor Corporation)

The first switching element 105a: p-channel MOSFET (ON when the potential of 0 V is applied to the gate, OFF when the potential of 3.0 V is applied to the gate)

The second switching element 105b: n-channel MOSFET (ON when the potential of 3.0 V is applied to the gate, OFF when the potential of 0 V is applied to the gate)

(Comparative Example 1)

A photoelectric conversion device was manufactured in the same manner as Example 1 except that the load part 103, the voltage monitoring part 104, the first switching element 105a, the second switching element 105b and the controlling part 106 were not incorporated when forming a circuit.

[Characteristic Evaluation]

With respect to the photoelectric conversion devices of Example 1 and Comparative Example 1 obtained as described above, durability was evaluated in the following manner.

With respect to the photoelectric conversion devices of Example 1 and Comparative Example 1, an IV curve was measured in a state in which white light of 200 lux was irradiated, and the maximum output operating power ($\mu$W) was calculated from the IV curve as "P1".

Subsequently, a fluorescent lamp of 500 lux is continuously irradiated to the photoelectric conversion elements of the photoelectric conversion devices of Example 1 and Comparative Example 1 for 1,000 hours, and then an IV curve was measured in a state in which white light of 200 lux was irradiated. The maximum output operating power ($\mu$W) was calculated from the IV curve as "P2".

Then, the output retention rate was calculated on the basis of the following expression, and this was used as an index of durability. The results are illustrated in Table 1.

$$\text{Output retention rate (\%)} = 100 \times P2 / P1$$

[Table 1]

| | Presence or Absence of Swithing part | Presence or Absence of Volatage monitoring part and controlling part | Durability |
|---|---|---|---|
| | | | Output Retention Rate (%) |
| Example 1 | Present | Present | 98 |
| Comparative Example 1 | Absent | Absent | 70 |

As illustrated in Table 1, it was found that in Example 1 the output retention rate of the photoelectric conversion element was greater than the output retention rate of the photoelectric conversion element of Comparative Example 1. In addition, it was found that in Example 1 the photoelectric conversion element was not broken.

From the above, it was confirmed that according to the photoelectric conversion device of the present invention, it is possible to prevent destruction of a photoelectric conversion element and have excellent durability.

EXPLANATIONS OF LETTERS OR NUMERALS

| | |
|---|---|
| 10 | Electrode substrate |
| 13 | Oxide semiconductor layer |
| 20 | Counter substrate |
| 50, 50A-50D | Photoelectric conversion cell |
| 100 | Photoelectric conversion element |
| 101 | Voltage conversion part |
| 102 | Electric storage part |
| 103 | Load part |
| 104 | Voltage monitoring part |
| 105, 305 | Switching part |
| 105a | First switching element |
| 105b | Second switching element |
| 106 | Controlling part |
| 200, 300 | Photoelectric conversion device |
| G | gate (first gate electrode, second gate electrode) |

**Claims**

1. A photoelectric conversion device comprising:

a photoelectric conversion element;
a voltage conversion part boosting a voltage output from the photoelectric conversion element;
an electric storage part capable of being charged up to a voltage output from the voltage conversion part;
a load part for applying a voltage of the electric storage part;
a voltage monitoring part monitoring a voltage of the electric storage part;
a switching part switching a first state in which a voltage output from the voltage conversion part is applied only to the electric conversion part, and a second state in which the voltage output from the voltage conversion part is not applied to any of the electric storage part and the load part; and
a controlling part controlling the switching part so that the electric storage part is discharged and a voltage is applied to the load part by switching the switching part to the second state in a case where the voltage of the electric storage part monitored by the voltage monitoring part reaches a full charge voltage of the electric storage part, and controlling the switching part so that the electric storage part is charged by switching the switching part to the first state in a case where the voltage of the electric storage part monitored by the voltage monitoring part becomes less than the full charge voltage of the electric storage part,
wherein the photoelectric conversion element includes at least one photoelectric conversion cell, and
wherein the photoelectric conversion cell includes an electrode substrate;
a counter substrate facing the electrode substrate;
an oxide semiconductor layer provided on the electrode substrate or the counter substrate;
a dye supported on the oxide semiconductor layer; and
an electrolyte disposed between the electrode substrate and the counter substrate and containing a redox pair.

2. The photoelectric conversion device according to claim 1,
wherein the switching part comprises:

a first switching element capable of switching a first ON state capable of applying the voltage output from the voltage conversion part to the electric storage part and a first OFF state where the voltage output from the voltage conversion part is not applied to any of the electric storage part and the load part; and
a second switching element switching a second OFF state where the voltage output from the voltage conversion part is not applied to the load part and a second ON state where the voltage of the electric storage part is applied to the load part, and
wherein the controlling part controls so that the electric storage part is discharged and a voltage is applied to the load part by switching the switching part to the second state by controlling the first switching element to the first OFF state and controlling the second switching element to the second state in a case where the voltage of the electric storage part monitored by the voltage monitoring part reaches a full charge voltage of the electric storage part, or so that the electric storage part is charged by switching the switching part to the first state by controlling the first switching element to the first ON state and controlling the second switching element to the second OFF state in a case where the voltage monitored by the voltage monitoring part becomes less than the full charge voltage of the electric storage part.

3. The photoelectric conversion device according to claim 2, wherein the first switching element is a p-channel MOSFET and the second switching element is a n-channel MOSFET.

4. The photoelectric conversion device according to claim 3,
wherein the controlling part and the voltage monitoring part are electrically connected to each other,
the first switching element has a first gate electrode,
the second switching element has a second gate electrode,
the first gate electrode and the controlling part are electrically connected,
the controlling part is capable of applying different potentials to the first gate electrode,
the second gate electrode and the controlling part are electrically connected, and
the controlling part is capable of applying different potentials to the second gate electrode.

5. The photoelectric conversion device according to any one of claims 1 to 4, wherein the electric storage part is a secondary battery or a capacitor.

**6.** The photoelectric conversion device according to any one of claims 1 to 5, wherein the load part is a resistance element.

# Fig.1

# Fig.2

# Fig.3

EP 3 509 182 A1

# Fig.4

100

# Fig.5

# Fig.6

# Fig.7

# Fig.8

EP 3 509 182 A1

# Fig.9

EP 3 509 182 A1

## INTERNATIONAL SEARCH REPORT

International application No.

PCT/JP2017/031216

### A. CLASSIFICATION OF SUBJECT MATTER

*H02J7/35*(2006.01)i, *H01G9/20*(2006.01)i, *H01M10/42*(2006.01)i, *H01M10/44* (2006.01)i, *H01M10/48*(2006.01)i

According to International Patent Classification (IPC) or to both national classification and IPC

### B. FIELDS SEARCHED

Minimum documentation searched (classification system followed by classification symbols)
H02J7/35, H01G9/20, H01M10/42, H01M10/44, H01M10/48

Documentation searched other than minimum documentation to the extent that such documents are included in the fields searched
Jitsuyo Shinan Koho        1922–1996    Jitsuyo Shinan Toroku Koho    1996–2017
Kokai Jitsuyo Shinan Koho  1971–2017    Toroku Jitsuyo Shinan Koho    1994–2017

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 5618134 B2  (Sony Corp.),<br>05 November 2014 (05.11.2014),<br>entire text; all drawings<br>& US 2011/0317320 A1<br>entire text; all drawings<br>& CN 102393649 A | 1-6 |
| A | JP 2011-253767 A  (Sony Corp.),<br>15 December 2011 (15.12.2011),<br>entire text; all drawings<br>& US 2011/0297210 A1<br>entire text; all drawings<br>& CN 102332352 A | 1-6 |

☒  Further documents are listed in the continuation of Box C.          ☐  See patent family annex.

| * | Special categories of cited documents: |
|---|---|
| "A" | document defining the general state of the art which is not considered    to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 20 September 2017 (20.09.17) | 03 October 2017 (03.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2017/031216

C (Continuation). DOCUMENTS CONSIDERED TO BE RELEVANT

| Category* | Citation of document, with indication, where appropriate, of the relevant passages | Relevant to claim No. |
|---|---|---|
| A | JP 60-34731 U (Sanyo Electric Co., Ltd.),<br>09 March 1985 (09.03.1985),<br>entire text; all drawings<br>(Family: none) | 1-6 |
| A | JP 2016-143823 A (Fujikura Ltd.),<br>08 August 2016 (08.08.2016),<br>entire text; all drawings<br>& WO 2016/125846 A1<br>entire text; all drawings<br>& CN 107004510 A | 1-6 |
| A | JP 2012-109170 A (Sony Corp.),<br>07 June 2012 (07.06.2012),<br>entire text; all drawings<br>(Family: none) | 1-6 |

Form PCT/ISA/210 (continuation of second sheet) (January 2015)

**EP 3 509 182 A1**

## REFERENCES CITED IN THE DESCRIPTION

**Patent documents cited in the description**

- JP 5618134 B